# FASCICULE DE BREVET EUROPEEN

(11) **EP 1 857 783 B1**
(45) Date de publication et mention de la délivrance du brevet: **18.04.2012**
(21) Numéro de dépôt: 07107959.4
(22) Date de dépôt: 10.05.2007
(51) Int. Cl.: G01D 5/244, G01D 5/245

(54) **Codeur pour capteur de position, à effet stabilisateur pour le passage à zéro de l'induction magnétique**
Kodierer für Positionsmelder mit stabilisierendem Effekt auf das Gegen-Null-Gehen der magnetischen Induktion
Position sensor encoder, with stabilising effect for resetting the magnetic induction to zero

(30) Priorité: 15.05.2006 FR 0651731
(43) Date de publication de la demande: 21.11.2007
(73) Titulaire: Electricfil Industrie, 01708 Miribel Cédex (FR)
(72) Inventeur: Legrand, Bertrand, 38000, GRENOBLE (FR); Corona, Jérôme, 38280, VILLETTE D'ANTHON (FR)
(74) Mandataire: Thibault, Jean-Marc

(56) Documents cités:
- EP-A1- 0 611 952
- DE-A1- 10 017 542
- FR-A1- 2 757 943
- FR-A1- 2 827 955

## Description

La présente invention concerne le domaine technique des capteurs magnétiques comportant un élément codeur se déplaçant à proximité d'une cellule de détection et adapté pour permettre de détecter la position et/ou la vitesse d'une cible mobile au sens général.

L'objet de l'invention concerne plus particulièrement la réalisation d'un codeur équipé d'une série de pôles nord et de pôles sud montés de manière alternée.

L'objet de l'invention trouve une application particulièrement avantageuse dans le domaine automobile où ce capteur peut être utilisé, par exemple, dans le cadre des fonctions d'allumage et d'injection.

L'objet de l'invention vise plus précisément le domaine des capteurs magnétiques de type TPOS (true power on sensor) aptes à fournir dès leur mise sous tension une information correspondant à la position de la cible mobile.

Dans l'état de la technique, il est connu différents types de capteurs aptes à fournir dès leur mise sous tension une information correspondant à la position de la cible mobile. Un tel capteur comporte une cible mobile réalisée par exemple en un matériau magnétique doux et présentant au moins une, et de manière, générale une série de dents séparées par des creux. Un tel capteur comporte également un aimant permanent aimanté définissant un entrefer avec la cible mobile. Dans l'entrefer est disposée une sonde sensible au sens et à l'intensité d'une induction magnétique.

Le déplacement de la cible mobile provoque pour chaque passage d'une dent devant la sonde, une variation de l'induction magnétique traversant la sonde qui délivre ainsi un signal électrique en fonction du sens et de l'amplitude de l'induction magnétique. Cette sonde sensible est associée notamment à un comparateur de niveau à hystérésis dont la sortie prend un premier état logique quand le signal électrique délivré par la sonde est supérieur à un seuil prédéterminé et un deuxième état logique lorsque le signal électrique est inférieur à un seuil prédéterminé.

Ce type de capteur fournit un signal correspondant à un creux ou à une dent dès la mise sous tension du capteur sans que la cible bouge. L'inconvénient d'un tel capteur est sa sensibilité à la variation des paramètres tels que la température et l'entrefer entre la cible et le capteur.

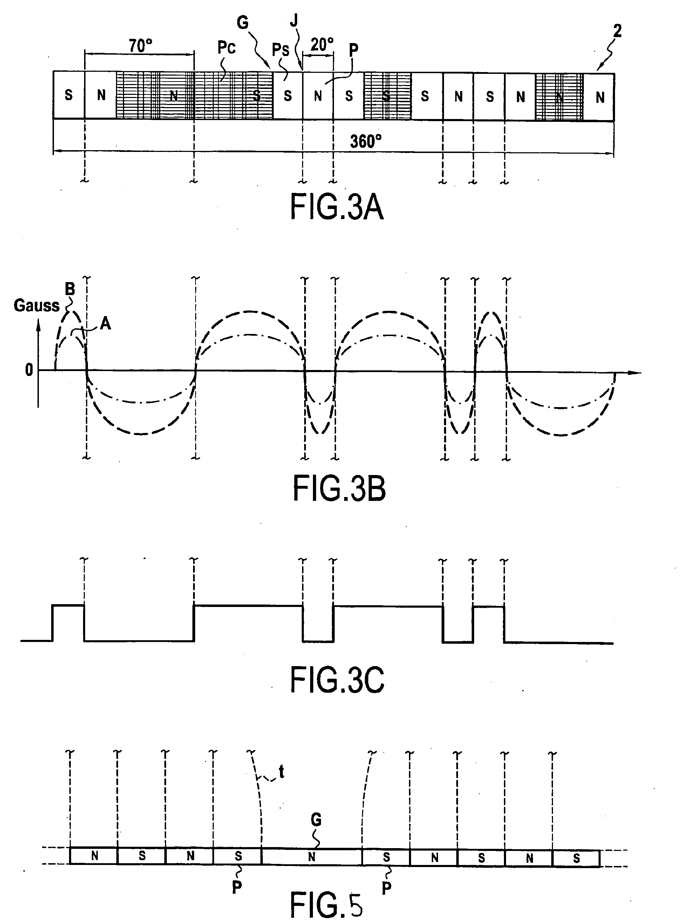

Dans l'état de la technique, il est également connu par exemple par les documents EP 0 611 952 et FR 2 757 943 un capteur de position ou de vitesse comportant un codeur magnétique défilant devant une cellule de détection. Un tel codeur est constitué par un anneau magnétique multipolaire pourvu sur sa circonférence de pôles nord et de pôles sud alternés dont au moins un pôle est dit irrégulier puisqu'il présente une largeur angulaire différente du pas d'écartement des autres pôles. L'inconvénient d'un tel capteur est sa grande sensibilité à la variation de l'entrefer entre la cellule de mesure et le codeur. En effet, la polarité de l'induction magnétique mesurée par une cellule est l'image de celle du pôle magnétique en face duquel elle se trouve. Cependant, la position de la transition entre une polarité et la polarité suivante est alignée sur la transition entre deux pôles magnétiques uniquement si ces pôles sont de largeur et d'aimantation identiques ou si l'entrefer entre la cellule et le codeur magnétique est minime. La **Figure 5** montre les positions des transitions de l'induction magnétique mesurée entre deux pôles opposés consécutifs d'un codeur multipolaire. Cette **Figure 5** permet d'illustrer le décalage de la position de la frontière ou de la transition **t** entre un gros pôle **G** et un petit pôle **P** de polarité opposée. Plus un gros pôle possède une largeur angulaire importante par rapport aux petits pôles voisins, plus ce gros pôle a tendance à élargir la zone dans laquelle la cellule mesure une induction dont la polarité est celle qui lui correspond. Il apparaît que cette tendance est d'autant plus prononcée que l'entrefer entre la cellule et le codeur est grand.

L'objet de l'invention vise donc à remédier aux inconvénients de l'état de la technique en proposant un codeur pour capteur de position et/ou de vitesse, étant peu sensible à la variation d'entrefer tout en étant apte à fournir un signal utile dès sa mise sous tenson.

Pour atteindre un tel objectif, l'objet de l'invention vise un codeur pour capteur de position conforme à la revendication 1.

Un autre objet de l'invention vise à proposer un capteur de position comportant un codeur conforme à l'invention défilant devant une cellule de mesure délivrant un signal électrique périodique correspondant à l'évolution de l'intensité de la composante radiale de l'induction générée par les pôles.

Selon une application préférée, le codeur est calé en rotation sur un arbre d'un moteur d'un véhicule automobile.

Selon une variante préférée de réalisation, le codeur est calé en rotation sur l'arbre à cames d'un moteur d'un véhicule automobile.

Diverses autres caractéristiques ressortent de la description faite ci-dessous en référence aux dessins annexés qui montrent, à titre d'exemples non limitatifs, des formes de réalisation de l'objet de l'invention.

La **Figure 1** est une vue schématique montrant un capteur de position conforme à l'invention.

La **Figure 2A** est une vue ramenée dans un plan d'un exemple de réalisation d'un codeur de l'art antérieur.

La **Figure 2B** illustre l'évolution de la composante radiale de l'induction magnétique mesurée pour deux entrefers différents, avec le codeur illustré à la **Fig. 2A****.**

La **Figure 2C** illustre les transitions de la tension de sortie d'un capteur pour des valeurs de l'induction magnétique détectée pour le codeur illustré à la **Fig. 2A****.**

La **Figure 3A** est une vue ramenée dans un plan d'un exemple de réalisation d'un codeur conforme à l'invention.

La **Figure 3B** illustre l'évolution de la composante radiale de l'induction magnétique mesurée pour deux entrefers différents, avec le codeur illustré à la **Fig. 3A****.**

La **Figure 3C** illustre les transitions de la tension de sortie d'un capteur pour des valeurs de l'induction magnétique détectée pour le codeur illustré à la **Fig. 3A****.**

La **Figure 4A** est une vue ramenée dans un plan, d'un exemple de réalisation d'un codeur conforme à l'invention.

La **Figure 4B** illustre un exemple d'un profil d'aimantation graduelle pour les pôles d'un codeur illustré à la **Fig. 4A****.**

La **Figure 5** est une vue ramenée dans un plan, montrant les positions des transitions de l'induction magnétique mesurée entre deux pôles consécutifs de signes opposés d'un codeur multipolaire de l'art antérieur.

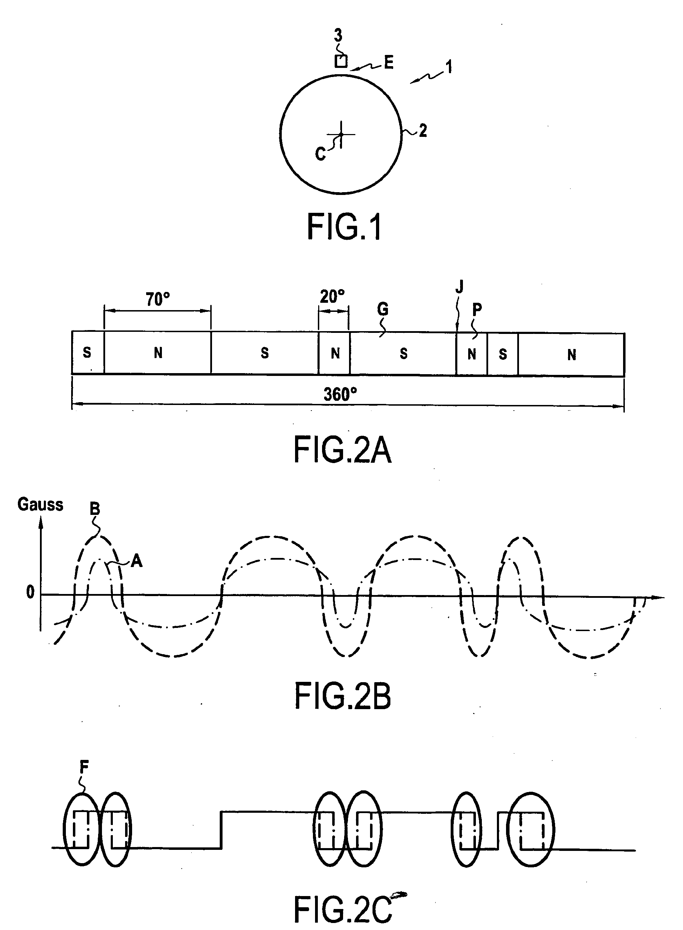

Tel que cela ressort plus précisément de la **Fig. 1****,** l'objet de l'invention concerne un capteur **1** de position et/ou de vitesses comportant un codeur magnétique **2** destiné à défiler devant une cellule de détection ou de mesure **3.** Le codeur **2** est constitué sous la forme d'un anneau magnétique multipolaire entraîné en rotation autour de son centre c et pourvu sur sa circonférence, de pôles magnétiques avec des polarités de signes opposés, en étant disposés de manière alternée. Le codeur **2** comporte ainsi des pôles nord **N** et des pôles sud **S** montés de manière alternée, et présentant une aimantation radiale.

Le codeur **2** comporte au moins un, et dans l'exemple illustré à la **Fig. 2A****,** quatre pôles dits petits **P** et quatre pôles **G** dits gros présentant chacun une largeur angulaire supérieure à la largeur angulaire d'un petit pôle **P.** Par exemple, chaque gros pôle **G** présente une largeur angulaire égale à 70°, tandis que chaque petit pôle **P** présente une largeur angulaire égale à 20°. Dans l'exemple illustré, le codeur **2** possède deux gros pôles **G** sud et deux gros pôles **G** nord ainsi que deux petits pôles **P** sud et deux petits pôles **P** nord. Les pôles nord et sud sont disposés de manière à obtenir une alternance de polarités selon le pourtour du codeur.

Dans l'exemple illustré à la **Fig. 2A****,** il apparaît ainsi six jonctions **J** entre un gros pôle **G** et un petit pôle **P** qui présentent entre eux des polarités opposées. Il s'avère, ainsi comme illustré à la **Fig. 2B****,** qu'à chaque passage d'une telle jonction **J** entre un petit pôle **P** et gros pôle **G,** le passage par le zéro gauss de la composante radiale de l'induction magnétique se décale en fonction de la variation d'entrefer **E** entre le codeur **2** et la cellule de mesure **3.** Les courbes **A** et **B** illustrent l'évolution de la composante radiale de l'induction magnétique mesurée lors du défilement du codeur illustré à la **Fig. 2A** devant la cellule **3,** pour deux valeurs différentes de l'entrefer **E.** Il s'ensuit une instabilité au niveau des fronts **F** du signal délivré en sortie d'un comparateur de niveau prenant en compte le signal issu de la cellule de mesure **3 (****Fig. 2C****).** Il est à noter qu'au niveau d'une jonction entre deux pôles d'une même catégorie, (les 2 gros pôles **G** nord et sud ou les deux petits pôles **P** nord et sud), le passage par le zéro gauss de la composante radiale de l'induction magnétique est sensiblement le même pour des valeurs différentes de l'entrefer **E.** Il n'apparaît donc pas d'instabilité au niveau des fronts correspondants du signal issu de la cellule de mesure **(****Fig. 2C****).**

L'objet de l'invention vise donc à remédier à cet inconvénient en évitant une dérive des positions des transitions, en fonction de la variation d'entrefer **E.** Tel que cela apparaît plus précisément à la **Fig. 3A****,** le codeur **2** selon l'invention comporte pour chaque jonction **J** entre un gros pôle **G** et un petit pôle **P,** un gros pôle **G** composé :
- d'une part, par au moins un petit pôle stabilisant ps de même signe que le gros pôle **G** et accolé au petit pôle **P** de signe opposé de ladite jonction, le petit pôle stabilisant **ps** présentant une largeur angulaire sensiblement identique audit petit pôle **P,**
- et d'autre part, par au moins un pôle complémentaire **pc** de même signe que le petit pôle stabilisant **ps,** le pôle complémentaire **pc** et le petit pôle stabilisant **ps** présentant un profil d'aimantation graduelle adapté pour stabiliser le passage à zéro gauss de la composante radiale de l'induction magnétique.

Ainsi, pour une jonction par exemple **J** entre un petit pôle **P** nord et un gros pôle **G** Sud, le gros pôle **G** sud est composé d'une part, par un petit pôle stabilisant **ps** sud accolé au petit pôle nord. La largeur angulaire du petit pôle stabilisant **ps** sud est sensiblement identique à la largeur angulaire du petit pôle nord **P.** Par ailleurs, le gros pôle **G** sud comporte également un pôle complémentaire **pc** sud. Le pôle complémentaire **pc** sud et le petit pôle stabilisant **ps** sud présentent un profil graduelle d'aimantation adapté pour stabiliser le passage à zéro gauss de la composante radiale de l'induction magnétique.

Il doit être considéré que cet anneau magnétique multipolaire ou aimant **2** est réalisé en un matériau qui peut prendre des valeurs d'aimantation variables, suite à l'application d'un champ magnétisant, ente deux valeurs extrêmes ± Br (correspondant à l'induction rémanente du matériau). Selon le champ magnétisant appliqué à cet anneau ou partie d'anneau, il est possible d'obtenir des profils d'aimantation variables ou graduels le long desquels la valeur de l'aimantation varie graduellement d'une valeur minimale à une valeur maximale. Le profil d'aimantation peut être continûment variable entre les valeurs extrêmes de l'induction rémanente ou comporter des zones planes correspondant chacune à une valeur d'aimantation constante mais différentes entre elles et prenant n'importe quelle valeur comprise entre les valeurs extrêmes de l'induction rémanente.

Ainsi dans l'exemple illustré à la **Fig. 3A****,** les courbes **A** et **B** de la **Fig. 3B** montrent l'effet d'un profil d'aimantation particulier en donnant l'induction magnétique dans l'air à proximité de l'anneau magnétique **2** pour deux valeurs différentes d'entrefer.

Ainsi, tel que cela ressort de la **Fig. 3B****,** l'aimantation du gros pôle **G** à savoir du pôle complémentaire **pc** et du petit pôle stabilisant **ps** est telle qu'au niveau de la jonction entre ce gros pôle **G** et le petit pôle **P** adjacent, le passage par le zéro gauss de la composante radiale de l'induction magnétique est le même pour des valeurs **A, B** différentes de l'entrefer **E.** Il n'apparaît pas d'instabilité au niveau des fronts correspondants du signal issu de la cellule de mesure **(****Fig. 3C****).**

Il est à noter que deux pôles complémentaires **pc** de signes opposés placés de manière jointive présentent avantageusement des profils d'aimantation sensiblement identiques avec des signes opposés de manière à conserver au niveau de leur jonction la stabilité pour le front **F** du signal issu de la cellule de mesure.

Bien entendu, l'objet de l'invention peut être mis en oeuvre pour une jonction **J** entre un gros pôle **G** nord et un petit pôle **P** sud. Dans ce cas, le gros pôle **G** nord est composé d'une part, par un petit pôle stabilisant ps nord accolé au petit pôle **P** sud et d'autre part, par un pôle complémentaire **pc** nord.

Selon une caractéristique avantageuse de l'objet de l'invention, pour chaque jonction **J,** le petit pôle stabilisant **ps** présente un profil d'aimantation sensiblement identique mais de signe opposé, au profil de l'aimantation du petit pôle **P.** De façon plus précise, du fait de la présence du pôle complémentaire **pc,** la position de la transition de l'induction magnétique, entre le petit pôle stabilisant **ps** et le petit pôle **P,** tend à être décalée vers le petit pôle **P.** Le profil d'aimantation du petit pôle stabilisant **ps** est donc adapté pour tenir compte de l'influence du pôle complémentaire **pc.** Ainsi, le profil d'aimantation du petit pôle stabilisant **ps** présente une valeur ou un niveau légèrement inférieur à la valeur ou au niveau du profil d'aimantation du petit pôle **P.** Pour ce faire, la largeur angulaire du petit pôle stabilisant **ps** est légèrement plus faible que la largeur du petit pôle **P** ou le niveau de l'aimantation du petit pôle stabilisant est inférieur au niveau de l'aimantation du petit pôle **P.**

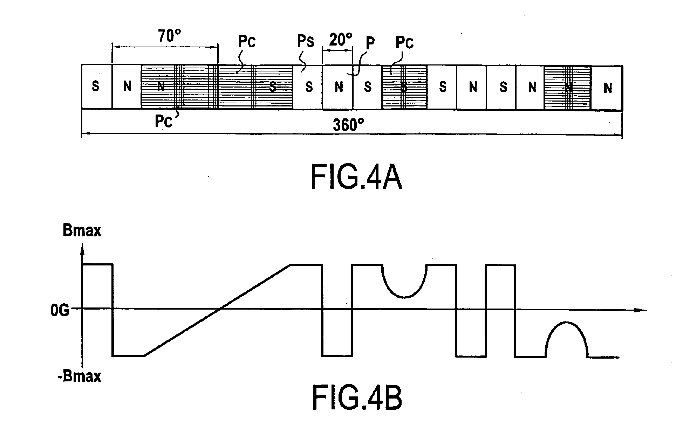

Il ressort de la description qui précède que le pôle complémentaire **pc** présente une aimantation graduelle, c'est-à-dire une aimantation dont la valeur n'est pas constante. Les **Fig. 4A** et **4B** illustrent à titre d'exemple, différents profils d'aimantation graduelle pour les pôles complémentaires **pc.** Ainsi, il peut être par exemple prévu, pour ces pôles, une aimantation variant linéairement ou variant selon un profil de type parabolique.

Selon une autre forme de réalisation, le pôle complémentaire **pc** et/ou le petit pôle stabilisant **ps** présentent une forme évolutive. A cet égard, la section du pôle complémentaire **pc** ou du petit pôle stabilisant **ps** peut être différent d'un rectangle tel que représenté et présente par exemple une forme polygonale différente comme un hexagone.

Le codeur **2** selon l'invention tel que décrit ci-dessus est destiné à être monté fixement en rotation avantageusement sur un arbre d'un moteur automobile. De préférence, le codeur **2** est calé en rotation sur l'arbre à cames d'un moteur d'un véhicule automobile.

L'invention n'est pas limitée aux exemples décrits et représentés car diverses modifications peuvent y être apportées sans sortir de son cadre.

## Revendications

1. Codeur pour capteur de position, du type comportant un anneau magnétique multipolaire **(2)** pourvu, sur sa circonférence, de pôles avec des polarités de signes opposés, disposés de manière alternée et étant destinés à défiler devant une cellule de mesure **(3)** délivrant un signal périodique correspondant à l'évolution de l'intensité de la composante radiale de l'induction magnétique délivré par les pôles, le codeur comportant au moins une jonction (J) entre un pôle, dit petit **(P),** et un pôle, dit gros **(G),** présentant une largeur angulaire supérieure à la largeur angulaire du petit pôle, le petit pôle **(P)** et le gros pôle **(G)** correspondant à chaque jonction **(J)** entre ledit petit pôle **(P)** et ledit gros pôle **(G)** présentant des polarités de signes opposés, le codeur comportant par ailleurs au moins une jonction entre deux gros pôles, **caractérisé en ce que** :
- pour chaque jonction **(J)** entre un petit pôle **(P)** et un gros pôle **(G),** le gros pôle **(G)** d'un signe donné est composé :
■ d'une part, par au moins un petit pôle stabilisant **(ps)** de même signe accolé au petit pôle **(P)** de signe opposé et présentant une largeur angulaire sensiblement identique audit petit pôle, le petit pôle stabilisant **(ps)** présentant un profil d'aimantation sensiblement identique mais de signe opposé, au profil de l'aimantation du petit pôle **(P),**
■ et, d'autre part, par au moins un pôle complémentaire **(pc)** de même signe que le pôle stabilisant **(ps),** le pôle complémentaire **(pc)** présentant un profil d'aimantation graduelle adapté pour que le passage à zéro gauss de la composante radiale de l'induction magnétique est sensiblement le même pour des valeurs différents d'entrefer **(E)** entre le codeur **(2)** et la cellule de mesure **(3),**
- au niveau d'une jonction entre deux gros pôles **(G),** les deux pôles complémentaires **(pc)** placés de manière jointive présentent des profils d'aimantation sensiblement identiques avec des signes opposés.

2. Codeur pour capteur de position selon la revendication 1, **caractérisé en ce que** le pôle complémentaire **(pc)** présente un profil d'aimantation graduelle continument variable entre les valeurs extrêmes de l'induction rémanente du matériau.

3. Codeur pour capteur de position selon la revendication 1, **caractérisé en ce que** le pôle complémentaire **(pc)** présente un profil d'aimantation variant selon un profil de type parabolique.

4. Codeur pour capteur de position selon la revendication 1, **caractérisé en ce que** le pôle complémentaire **(pc)** présente un profil d'aimantation variant linéairement.

5. Codeur pour capteur de position selon la revendication 1, **caractérisé en ce que** le petit pôle stabilisant **(ps)** présente un profil d'aimantation de valeur constante.

6. Capteur de position **caractérisé en ce qu'**il comporte au moins un codeur **(2)** conforme à l'une des revendications 1 à 5, défilant devant une cellule de mesure **(3)** délivrant un signal électrique périodique correspondant à l'évolution de l'intensité de la composante radiale de l'induction magnétique généré par les pôles.

7. Capteur de position selon la revendication 5, **caractérisé en ce que** le codeur **(2)** est calé en rotation sur un arbre d'un moteur d'un véhicule automobile.

8. Capteur de position selon la revendication 6, **caractérisé en ce que** le codeur **(2)** est calé en rotation sur l'arbre à cames d'un moteur d'un véhicule automobile.

## Claims

1. An encoder for a position sensor, of the type including a multipolar magnetic ring (2) provided, on its circumference, with alternately positioned poles having polarities of opposite signs and intended to move past a measuring cell (3) delivering a periodic signal corresponding to the change in the intensity of the radial component of the magnetic induction delivered by the poles, the encoder including at least one junction (J) between one so-called small pole (P) and one so-called large pole (G), having an angular width larger than the angular width of the small pole, the small pole (P) and the large pole (G) corresponding to each junction (J) between said small pole (P) and said large pole (G) having polarities of opposite signs, the encoder further including at least one junction between two large poles and being **characterized in that**:
- for each junction (J) between a small pole (P) and a large pole (G), the large pole (G) of a given sign consists:
• of at least one small stabilizing pole (ps) of the same sign placed adjacent to the small pole (P) of opposite sign and having an angular width substantially identical to that of said small pole, the small stabilizing pole (ps) having a magnetization profile substantially identical but of opposite sign, with the profile of the magnetization of the small pole (P), on the one hand; and
• of at least one complementary pole (pc) of the same sign as the stabilizing pole (ps), the complementary pole (pc) having a gradual magnetization profile adapted so that the passing through zero gauss of the radial component of the magnetic induction is substantially the same for different air gap (E) values between the encoder (2) and the measuring cell (3), on the other hand,
- at a junction between two large poles (G), the two complementary poles (pc) placed contiguously have substantially identical magnetization profiles with opposite signs.

2. An encoder for a position sensor according to claim 1, **characterized in that** the complementary pole (pc) has a gradual magnetization profile that varies continuously between the extreme values of the remanent flux density of the material.

3. An encoder for a position sensor according to claim 1, **characterized in that** the complementary pole (pc) has a magnetization profile that varies according to a profile of parabolic type.

4. An encoder for a position sensor according to claim 1, **characterized in that** the complementary pole (pc) has a magnetization profile that varies linearly.

5. An encoder for a position sensor according to claim 1, **characterized in that** the small stabilizing pole (ps) has a magnetization profile of constant value.

6. A position sensor **characterized in that** it includes at least one encoder (2) in accordance with any one of claims 1 to 5, moving past a measuring cell (3) delivering a periodic electric signal corresponding to the change in the intensity of the radial component of the magnetic induction generated by the poles.

7. A position sensor according to claim 5, **characterized in that** the encoder (2) is blocked in rotation on a shaft of an engine of a motor vehicle.

8. A position sensor according to claim 6, **characterized in that** the encoder (2) is blocked in rotation on the camshaft of an engine of a motor vehicle.

## Patentansprüche

1. Codierer für einen Positionssensor, vom Typ umfassend einen mehrpoligen Magnetring (2), der an seinem Umfang mit Polen mit Polaritäten mit entgegengesetzten Vorzeichen versehen ist, die abwechselnd angeordnet und dazu bestimmt sind, an einer Meßzelle (3) vorbeizulaufen, die ein periodisches Signal liefert, das der Entwicklung der Intensität der radialen Komponente der durch die Pole gelieferten magnetischen Induktion entspricht, wobei der Codierer wenigstens eine Verbindungsstelle (J) zwischen einem sogenannten kleinen Pol (P) und einem sogenannten großen Pol (G), welcher eine Winkelbreite aufweist, die größer als die Winkelbreite des kleinen Pols ist, umfaßt, wobei der kleine Pol (P) und der entsprechende große Pol (G) an jeder Verbindungsstelle (J) zwischen dem kleinen Pol (P) und dem großen Pol (G) Polaritäten mit entgegengesetzten Vorzeichen aufweisen, wobei der Codierer außerdem wenigstens eine Verbindungsstelle zwischen zwei großen Polen umfaßt, **dadurch gekennzeichnet, daß**:
- bei jeder Verbindungsstelle (J) zwischen einem kleinen Pol (P) und einem großen Pol (G) der große Pol (G) mit einem gegebenen Vorzeichen besteht:
- einerseits aus wenigstens einem stabilisierenden kleinen Pol (ps) mit gleichem Vorzeichen, welcher neben dem kleinen Pol (P) mit entgegengesetztem Vorzeichen angeordnet ist und eine im wesentlichen identische Winkelbreite wie der kleine Pol aufweist, wobei der stabilisierende kleine Pol (ps) ein zu dem Profil der Magnetisierung des kleinen Pols (P) im wesentlichen identisches Magnetisierungsprofil, jedoch mit entgegengesetztem Vorzeichen aufweist, und
- andererseits aus wenigstens einem ergänzenden Pol (pc) mit gleichem Vorzeichen wie der stabilisierende Pol (ps), wobei der ergänzende Pol (pc) ein geeignetes abgestuftes Magnetisierungsprofil aufweist, damit der Null-Gauß-Durchgang der radialen Komponente der magnetischen Induktion bei unterschiedlichen Werten des Luftspalts (E) zwischen dem Codierer (2) und der Meßzelle (3) im wesentlichen der gleiche ist,
- im Bereich einer Verbindungsstelle zwischen zwei großen Polen (G) die beiden aneinanderstoßend angeordneten ergänzenden Pole (pc) im wesentlichen identische Magnetisierungsprofile mit entgegengesetzten Vorzeichen aufweisen.

2. Codierer für einen Positionssensor, nach Anspruch 1, **dadurch gekennzeichnet, daß** der ergänzende Pol (pc) ein abgestuftes Magnetisierungsprofil aufweist, das zwischen den Extremwerten der remanenten Induktion des Materials stufenlos variabel ist.

3. Codierer für einen Positionssensor, nach Anspruch 1, **dadurch gekennzeichnet, daß** der ergänzende Pol (pc) ein sich entsprechend einem parabelartigen Profil änderndes Magnetisierungsprofil aufweist.

4. Codierer für einen Positionssensor, nach Anspruch 1, **dadurch gekennzeichnet, daß** der ergänzende Pol (pc) ein sich linear änderndes Magnetisierungsprofil aufweist.

5. Codierer für einen Positionssensor, nach Anspruch 1, **dadurch gekennzeichnet, daß** der stabilisierende kleine Pol (ps) ein Magnetisierungsprofil mit konstantem Wert aufweist.

6. Positionssensor, **dadurch gekennzeichnet, daß** er wenigstens einen Codierer (2) nach einem der Ansprüche 1 bis 5 umfaßt, der an einer Meßzelle (3) vorbeiläuft, die ein periodisches elektrisches Signal liefert, das der Entwicklung der Intensität der radialen Komponente der durch die Pole erzeugten magnetischen Induktion entspricht.

7. Positionssensor nach Anspruch 5, **dadurch gekennzeichnet, daß** der Codierer (2) an einer Welle eines Motors eines Kraftfahrzeugs drehfest angebracht ist.

8. Positionssensor nach Anspruch 6, **dadurch gekennzeichnet, daß** der Codierer (2) an der Nockenwelle eines Motors eines Kraftfahrzeugs drehfest angebracht ist.
